(19) Europäisches Patentamt
European Patent Office
Office européen des brevets

(11) Publication number: **0 039 971**
**B1**

(12) **EUROPEAN PATENT SPECIFICATION**

(45) Date of publication of patent specification: **30.01.85**

(51) Int. Cl.⁴: **C 08 F 10/02,** C 08 F 4/68, C 08 F 4/62

(21) Application number: **81200480.2**

(22) Date of filing: **07.05.81**

# (54) Process for the preparation of a polymerization catalyst and preparation of ethylene polymer therewith.

(30) Priority: **07.05.80 NL 8002599**

(43) Date of publication of application:
**18.11.81 Bulletin 81/46**

(45) Publication of the grant of the patent:
**30.01.85 Bulletin 85/05**

(84) Designated Contracting States:
**AT BE DE FR GB IT NL SE**

(56) References cited:
**NL-A-7 605 535**
**US-A-3 351 623**
**US-A-3 635 840**

(73) Proprietor: **STAMICARBON B.V.**
**Postbus 10**
**NL-6160 MC Geleen (NL)**

(72) Inventor: **van de Leemput, Lambertus Johannes M.A.**
**Imkerstraat 16**
**NL-6101 GW Echt (NL)**
Inventor: **Nooijen, Godefridus Arnoldus Henricus**
**Gouv. Houbenstraat 16**
**NL-5981 BL Helden-Panningen (NL)**
Inventor: **van der Loo, Hendrikus Willem**
**Burg. Luijtenstraat 35**
**NL-6151 GE Munstergeleen (NL)**

(74) Representative: **De Boer, Jan et al**
**OCTROOIBUREAU DSM Postbus 9**
**NL-6160 MA Geleen (NL)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a process for the preparation of a supported chromium oxide-type of catalyst for the polymerization of olefins by bringing the conversion product of a chromium-1,3-diketo compound and an organometallic compound of a metal from group II or III of the periodic system on an inert inorganic support and heating the whole in a non-reducing atmosphere between 200 and 1200°C and to a process for the polymerization of ethylene and the copolymerization of ethylene with 15 moles % at most of one or more $\alpha$-alkenes with 3 to 15 carbon atoms in the presence of such a catalyst.

Such processes are known from the Netherlands patent application 76.05535, in which, in addition to a supported chromium oxide component, an organometallic compound of an element of group II or III of the periodic system is brought into the polymerization medium.

Polymerizations of olefins, particularly of ethylene with supported chromium oxide-type of catalysts, have been known for a long time. Such polymerizations can be carried out as 'solution processes', in which processes the polymer is obtained as a solution in the solvent used for the polymerization. Such a polymerization is described in U.S. patent specification 2,825,721. The polymerization of ethylene with supported chromium oxide-types of catalysts can also be carried out as 'suspension process', in which the ethylene polymer is precipitated and is obtained as a suspension. Such a method is described in U.S. patent specifications 2,825,721 and 3,087,917. Solution polymerizations are carried out at temperatures of at least 120°C, whereas suspension polymerizations are carried out at temperatures of about 110°C at most.

With the suspension polymerizations, ethylene polymers with very low melt indices, i.e. high molecular weights, are often obtained. The molecular weight is higher as the polyerization temperature is lower. Thus there are many catalysts of the supported chromium oxide-type which are very suitable to be applied in a solution process at temperatures of, e.g., 140°C or higher, but which yield, in a suspension process, high-molecular polymer only. Now, it has been known for a long time that the molecular weight can be reduced with molecular weight regulators. The most common molecular weight regulator is hydrogen. Many supported chromium oxide-catalysts, however, show only little sensitivity to hydrogen. In a suspension process large quantities of hydrogen must then be added to the monomer in order to obtain desired molecular weights. Consequently, the effectiveness of the catalyst is then strongly reduced. Lower yields are obtained and, moreover, large quantities of hydrogen must be recirculated with small quantities of monomer. Such methods will then be very unattractive economically and often be hardly feasible technically. On the other hand, a suspension process has advantages over a solution process, and that is why there is a need for catalysts with which, in a suspension process, ethylene polymers with lower molecular weights can be prepared and which catalysts are sensitive to temperature and hydrogen. The fact is that the variation of the molecular weight with the polymerization temperature differs widely. With many catalysts the molecular weight shows only little variation as the temperature changes. With some catalysts it is much stronger, and with these catalysts the molecular weight can already be considerably influenced by the choice of the polymerization temperature. In using these catalysts it is desirable that limited quantities of hydrogen can bring about a definite lowering of the molecular weight.

Efforts are now generally being made to find possibilities of influencing, by modification of supported chromium oxide-types of catalysts, the molecular weights of ethylene polymers to be prepared therewith. Thus it is described in the U.K. patent specification 1,231,322 and in the U.S. patent specifications 3,812,058; 3,862,104; 3,900,457 and 3,974,101 that the melt index of ethylene polymers is a function of the preparative method of the silica support and of the activation by heating of supported chromium oxide, so that, by a suitable choice, polyethylene with higher melt incides can be prepared in a suspension process.

Now it was found that a catalyst can be obtained which can be used for both the solution polymerization and the suspension polymerization of ethylene by reacting a chromium-1,3-diketo compound with the formula $Cr(OCR_1\ CR_2\ CR_3O)_3$, wherein $R_1$, $R_2$, $R_3$ are the same or different and represent each of them, an alkyl group with 1—10 carbon atoms and $R_2$ may, moreover, represent a hydrogen atom, and a vanadium chelate or a vanadyl chelate of a 1,3-diketone with the formula

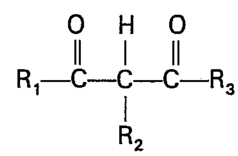

wherein $R_1$, $R_2$ and $R_3$ have the aforesaid meanings, separately or jointly, with 0,5—20 moles of an organometallic compound of a metal group II or III of the periodic system, in which hydrocarbyl groups with 1—20 carbon atoms are bound, via a carbon atom, to the relative metal, jointly contacting the reaction products with and depositing them on an inert inorganic support, specifically on silica, and heating the support with the chromium and vanadium compound deposited thereon in a

non-reducing atmosphere at a temperature of 200°C to 1200°C.

The U.S. patent specification 3,635,840 describes catalysts obtained by contacting supported chromium oxide with an organometallic compound and a vanadium chelate or vanadyl chelate of a 1,3-diketone, upon which the product obtained is heated in an oxygen-containing gas temperatures of 260 to 816°C. According to the example, vanadium acetylacetonate is contacted with triethylaluminium and a chromium oxide catalyst is impregnated therewith and then heated at 566°C. Ethylene is polymerized with this catalyst in cyclohexane at 145°C, respectively 148.3°C. Polyethylene with a melt index of 0.17, respectively 0.18, is then obtained.

Now, surprisingly it was found that, with the catalysts of the invention, ethylene can be polymerized at about 100°C, under otherwise similar conditions, to a polyethylene with a melt index of about 0.2. Moreover, the temperature sensitivity of the catalysts in question proves to be considerably greater. With the catalyst according to U.S. patent specification 3,635,840 a difference in temperature of 3.3°C will bring about a change in melt index of no more than 0.01. With the catalysts of the invention the melt index can easily be varied to a considerable degree by small variations in the temperature. Moreover, these catalysts also have a good hydrogen sensitivity, i.e. that addition of limited quantities of hydrogen brings about a substantial reduction of the molecular weight.

The suspension polymerization with supported chromium oxide-types of catalysts is carred out in practice at temperatures of about 80°C to about 105°C.

With the catalysts according to the invention polyethylene with melt indices from 0 to 4 can be prepared within that temperature range. It is a special advantage and these catalysts cannot only be used in a solution but also in a suspension polymerization.

The 1,3-diketo complexes, both of chromium and of vanadium, are chelates of these metals with 1,3-diketo compounds with the general formula:

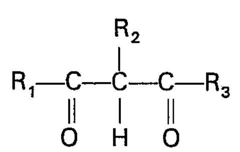

wherein $R_1$, $R_2$ and $R_3$ have the aforesaid meanings, such as acetylacetone; hexane-2,4-dione; heptane-2,4-dione; octane-2,4-dione; octane-3,5-dione and homologues thereof, wherein $R_2$ is an alkyl group with 1 to 10 carbon atoms. Preferably a 1,3-diketone is applied, in which $R_2$ is a hydrogen atom, and more specifically acetylacetone.

Preferably the chromium-1,3-diketo complex is the chromium(III)-acetylacetonate and acetylacetonates of vanadium are used as well. These may be $V(acac)_2$; $V(acac)_3$; $VO(acac)_2$ and $VO(acac)_3$, wherein acac represents the acetylacetone residue. Similar compounds of other 1,3-diketones can also bed used.

Good results are obtained with vanadium(III)-acetylacetonate, the use of which is preferred.

The 1,3-diketo compounds, preferably the acetylacetonates, are converted with an organometallic compound of a metal of group II or III of the periodic system, such as beryllium, magnesium, boron, aluminium or gallium. The organometallic compounds of a metal of group II or III are preferably compounds of the type $(R_4)_m$ Me, wherein $R_4$ represents a hydrocarbyl group and m is 2 or 3 as the valency of the metal Me may be. The hydrocarbyl groups in these compounds are preferably alkyl groups with 1—20 carbon atoms.

Suitable compounds are particularly aluminiumtrialkyls, magnesiumdialkyls. The alkyl groups in the magnesiumdialkyls preferably contain 4 to 12 carbon atoms. Suitable organomagnesium compounds are diethylmagnesium, dipropylmagnesium, diisopropylmagnesium and, preferably, dibutyl-, respectively, diisobutylmagnesium, but also diamylmagnesium, dihexylmagnesium, dioctylmagnesium, didecylmagnesium, didodecylmagnesium, but also dicycloalkylmagnesium with the same or different cycloalkyl groups with 3 to 12 carbon atoms and preferably 5 to 6 carbon atoms is suitable also. Likewise an alkyl and a cycloalkyl group can be bound to magnesium. Though alkyl- or cycloalkylmagnesium compounds are preferred, magnesium aryls can be used also, if so desired, particularly diphenylmagnesium, but also ditolyl- and dixylyl magnesium. The diarylmagnesium compounds are not or poorly soluble in aliphatic hydrocarbons and are, therefore, dissolved in aromatic hydrocarbons. The organomagnesium compounds can be prepared in a manner known per se, (see, for instance, Organometallic Compounds; Vol. 1; G. E. Coates; M. L. H. Green and K. Wade; Organometallverbindungen; F. Runge). In particular solutions of magnesiumalkyls prepared according to the method of the Netherlands patent 139,981 are used.

Suitable aluminium compounds are aluminiumtrialkyls. Organoaluminium compounds with the general formula of $(R_5)_2AlX$, wherein $R_5$ represents an alkyl group with 1—10 carbon atoms and X a hydrogen atom or an alkoxy group, can also be used, though it is desirable to minimize the occurrence of alkoxy groups.

Aluminium compounds known from, for instance, the German 'Auslegeschriften' 1,956,353; 1,183,084; 1,136,113 and 1,186,633, containing one or more residues derived from a diene, can also be applied.

Mixtures of the said organometallic compounds can be used also.

The conversion of the diketo compounds with an organomagnesium or organoaluminium compound or an organometallic compound of another metal from group II or III is carried out in a solvent inert in respect of these compounds. This conversion is preferably carried out in a hydrocarbon solvent, more specifically in one or more linear or branched aliphatic hydrocarbons, such as butane, pentane, hexane, heptane, octane, decane, or the branched isomers, or in a light petrol consisting mainly of hexanes and/or heptanes, or a heavier petrol. Higher linear or branched saturated aliphatic hydrocarbons or mixtures thereof can also be used as solvent. It is true that chromium(III)acetylacetonate and the vanadiumacetylacetonates are better soluble in aromatic hydrocarbons than in aliphatic hydrocarbons and that they can be converted with magnesiumdiaryls soluble in aromatic hydrocarbons, but on account of the cost of aromatic hydrocarbon solvents, and also on account of the possible risks in respect of health, they are generally not used if adequate embodiments of the method in aliphatic and/or cycloaliphatic solvents are available.

Owing to their poor solubility in aliphatic and/or cycloaliphatic hydrocarbons, chromium(III)acetylacetonate and the vanadium acetylacetonates will be partly dispersed.

Now, if an organomagnesium or organoaluminium compound is added, then the acetylacetonates will go at least partly into solution. The dissolution is stimulated by lightly heating, for instance, at temperatures of 40° to 100°C or, with low-boiling solvents, to the boiling point of the solvent (optionally under pressure). The acetylacetonates will colour the hydrocarbon solvent lightly, because a small part dissolves. With the organomagnesium or organoaluminium compound dark-coloured solutions will be formed. Thus the dark violet chromium(III)acetlyacetonate will dissolve to a small degree in light petrol to a faintly violet-coloured solution. With a magnesium- or aluminiumalkyl, considerable quantities of chromium(III)acetlyacetonate will go into solution and a deeply dark brown solution will be formed. Vanadium(III)acetylacetonate will dissolve to a slight degree to a faintly brown solution, and by conversion with magnesium or aluminiumalkyl a dark brown solution will again be formed from it.

The atom ratio of the metal of the 2nd or 3rd group in the relative organometallic compound to chromium plus vanadium in the 1,3-diketo complexes are chosen from 0.5:1 to 20:1, preferably from 1:1 to 6:1.

The solution of the complexes of an organometallic compound and a chromium and vanadium-1,3-diketo compound is contacted with an inert inorganic support, for instance by adding the solution slowly and during stirring to a support suspended in the same solvent. The chromium and vanadium compounds can be deposited, by evaporation, on the carrier in so far as they have not already wholly or partly deposited from the solution onto the support. If they are deposited from the solution on the carrier, then this will be clearly perceptible, because the solution will discolour and the support will be coloured dark. The inert inorganic support is preferably an oxide, such as silicon oxide, aluminium oxide, mixed aluminium-silicon oxides, zirconium oxide, thorium oxide, magnesium oxide. Of these oxides preference is given to silicon oxide, aluminium oxide and the mixed silicon-aluminium oxides and more specifically silicon oxide. Silicon oxide is known and applicable in many different forms. Particularly suitable are silica xerogels with large pore volumes.

In so far as necessary, the support is dried, for instance by heating in dry air, before the complex transition metal compounds are deposited thereon. The drying must be carried out in such a manner that preferably the support no longer contains physically bound water.

The quantity of complex chromium compound as described above, which is deposited on a support, may vary within wide limits, but is generally 0.01 to 10 % by weight calculated as chromium on support. More or less is possible but offers no advantages. Preferably so much complex chromium compound is deposited on the support that the chromium content thereof is 0.02 to 2 % by weight, and more specifically 0.05 to 1 % by weight.

The quantities of the complex vanadium compounds deposited on the support together with the complex chromium compound may also vary within wide limits. Generally this quantity will be chosen so that the atom ratio of chromium to vanadium is between 50:1 and 1:50. Preferably so much of the complex vanadium compounds is used that the chromium:vanadium ratio is between 20:1 and 1:20, and more specifically between 10:1 and 1:10. By the choice of the molar ratio of chromium to vanadium, the broadness of the molecular-weight distribution of the polymer can be influenced.

After containing the complex chromium and vanadium compounds with the support, support and metal compounds are separated from the solvent by filtration or evaporation. If the complex chromium and vanadium compounds are not deposited on the support to a considerable degree which will be evident from the solvent showing no or little discolouration, they will be expelled by evaporation.

The support with the chromium and vanadium compounds deposited thereon is subsequently heated in a non-reducing atmosphere, such as oxygen, air, nitrogen, carbon dioxide, or a noble gas, at a temperature of 200 to 1200°C. Preferably heating is

effected in an oxidizing atmosphere such as, for instance, oxygen, oxygen-containing gases or air, in which process, of course, air with a reduced or raised oxygen-content also forms an oxidizing atmosphere and is usable as well.

Preferably the support with metal compounds is heated at 400 to 1200°C, and more specifically at 500 to 1100°C.

The heating times may vary from a few seconds to tens of hours or more. At temperatures of 500 to 1100°C the heating time may generally be from 30 minutes to 8 hours.

The optimum heating time can easily be fixed by an expert experimentally by preparing, under otherwise similar forming conditions, catalysts of the same composition and varying the heating times at a certain temperature at which heating is effected and by subsequently determining the polymerization characteristics of the final catalyst.

Preferably the catalyst on support is brought, after cooling to ambient temperature, into a hydrocarbon solvent, which preferably is the polymerization medium. This may be aliphatic or cyclic hydrocarbons, such as butane, isobutane, normal or branched pentanes, hexanes, heptanes, octanes and higher straight and/or branched saturated aliphatic hydrocarbons, cyclopentane, cyclohexane, cycloheptane, cyclooctane, etc. and mixtures, particularly fractions obtained direct or indirect from mineral oil, such as light petrol, kerosine or gasoil, which indeed may contain aromatics, but preponderantly consist of aliphatics and/or cycloaliphatics. Aromatic hydrocarbons, such as benzene, toluene, xylenes or halogenated hydrocarbons can also be used, but for practical reasons, viz. on accunt of the cost and risks in respect of health, preference will generally be given to aliphatic hydrocarbons or mineral oil fractions containing little or no aromatics.

To the catlyst on support dispersed in an inert diluent in organometallic compound of an element of group II or III of the periodic system, such as beryllium, magnesium, boron, aluminium or gallium, may be added. The molar ratio between the organometallic compound and the chromium and vanadium components deposited on the support may then vary within wide limits, for instance from 0.1:1 to 200:1. Preferably the ratios are between 1:1 and 40:1.

In how far the addition of such organometallic compounds is desirable depends on the polymerization conditions and on the desired polymer. With low catalyst concentrations and with relatively low monomer concentrations in the diluent, the polymerization can often be started and sustained better if such organometallic compounds are added. The impurities content in monomer and diluent also plays a part. Experimentally it is easy to determine if the addition of the said organometallic compounds is desirable.

Addition of organometallic compounds also slightly increases the activity and may slightly reduce the melt index of the polyethylene to be prepared. The polyethylene obtained with catalysts to which organometallic compounds have been added has a low density and often a broader molecular weight distribution than polyethylene prepared under the same circumstances and with the same chromium catalyst but without addition of organometallic compound. By addition of organometallic compounds the properties of the polyethylene to be prepared can thus be modified.

The suspension polymerizations with the catalysts of the invention are generally carried out at temperatures of 100°C at most. In some volatile solvents, such as, for instance, isobutane, the suspension polymerization can be carried out at even slightly higher temperatures to about 110°C. Preferably, however, polymerization is carried out at temperatures of 105°C at most. The polymerization can be carried out at about 50°C, but preference is given to choosing temperatures of at least 70°C, and more specifically 85°C or higher.

Ethylene polymerizations with the catalysts of the invention can be carried out also at temperatures of above 120°C, for instance from 150—200°C. Then a solution is obtained of the ethylene polymer in the solvent, which solution can be worked up by a method known per se. The polyerization can also be carried out as so-called gas phase polymerization, the embodiments of which are known from, among others, the U.K. patent specification 1,373,982.

The polymerization can be carried out under atmospheric pressure, but also under elevated pressure. With the use of low-boiling diluents, such as butane, isobutane, pentane, the pressure in the reactor will have to be above atmospheric pressure. The monomer pressure may be atmospheric, but is preferably higher. By carrying out the polymerization under elevated pressure of the monomer, higher yields can be obtained, so that generally elevated pressures to, for instance, 10 MPa will be applied. Higher pressures, even up to, for instance, 200 MPa or more, are possible, but are generally not applied for practical reasons.

Preferably polymerization is carried out at pressures of between 600 and 8000 kPa, and more specifically of between 1200 and 5000 kPa. The pressure to be chosen will depend, in part, on the polymerization temperature and the volatility of the diluent.

The monomer pressure will be determined, in part, by balancing, on the one side, the cost of an installation for relatively high pressures compared with the cost of an installation for relatively low pressures and a weighing of the safety aspects thereof, and, on the other side, the polyethylene productivity under high, respectively low, pressures. It is substantially economic factors that determine the ultimate choice of the monomer pressure.

The quantity of catalyst is generally chosen so that the diluent contains 0.001 to 10

mmoles of chromium per litre of diluent and preferably 0.001 to 0.1 mmol/1.

In applying the process of the invention, modifications known per se can be applied. Thus the molecular weight can, for instance, be regulated not only by the temperature but also by addition of hydrogen or other modifiers used for this purpose.

The polymerization can be carried out also in two or more steps in either parallel arrangement or in series arrangement, in which process different catalyst compounds, temperatures, residence times, pressures, hydrogen concentrations, etc. are applied, if desired.

The invention is further elucidated by the following examples without, however, being restricted thereto.

Example I

a. Catalyst preparation

Under an atomsphere of dry nitrogen, 2 g of chromium(III)acetylacetonate (5.73 mg atom chromium) is suspended in 80 ml of light petrol (boiling range 60—80°C). A small part goes into solution, in consequence of which the solvent is coloured faintly violet. Subsequently, 4.33 ml of a 3.97 molar solution of triisobutyl aluminium in light petrol (17.19 mg atom aluminium) is added dropwise during stirring.

Similarly, 2 g of vanadium(III)acetylacetonate (5.74 mg atom vanadium) was suspended in light petrol and 17.19 mmoles of triisobutyl aluminium was added. Both suspensions were stirred until all chromium and vanadium had gone into solution, and both solutions were replenished to 100 ml.

50 g of a silica xerogel with a pore volume of 1.6 $cm^3/g$ and a specific surface of 270 $m^2/g$, dried in dry air at 200°C for 4 hours, is suspended in 250 ml of light petrol, and subsequently 85 ml of the chromium solution and 17 ml of the vanadium solution are first mixed with each other and then added, during stirring, dropwise to the suspension of the silica xerogel. This mixture is then boiled, under reflux cooling, for one hour and the petrol is then evaporated. The silica xerogel on which the chromium(III)-acetlyacetonate and the vanadium(III)-acetlyacetonate are deposited is then heated, for 8 hours, in a stream of dry air at 900°C.

The silica xerogel contains 0.50 % by weight of chromium and 0.10% by weight of vanadium.

b. Ethylene polymerization

Into a stirred autoclave 1500 ml of light petrol and 0.1 g of catalyst are brought. 0.2 mmole of trioctylaluminium is added, the contents are heated at 85°C (pressure petrol 175 kPa) and ethylene is pressed in until the pressure is 700 kPa. Polymerization is carried out for 90 minutes at 85°C.

Polyethylene with a melt index (measured according to ASTM D-1238) of 0.01 is obtained. The activity of the catalyst is 1400 g of polyethylene per mg atom (chromium+vanadium) per 100 kPa of ethylene pressure per hour.

Examples 2—7

Into an autoclave of 5 1, 1.2 kg of isobutane is brought under atmosphere of dry nitrogen, upon which the nitrogen is discharged. Subsequently, heating is effected at the polymerization temperature, ethylene and possibly hydrogen are pressed in and about 400 mg of the catalyst prepared according to example 1a is added via a catalyst metering system. In a number of experiments triethylboron is added as well. Polymerization is carried out for 90 minutes. During the polymerization the ethylene pressure is kept constant.

The results are summarized in the table. Columns 3 and 4 show the ethylene, respectively hydrogen, pressure in kPa. Column 5 mentions the quantity of triethylboron in mg of B per kg of isobutane. Column 6 mentions the productivity in grammes of polyethylene per gramme of catalyst.

Examples 2, 3 and 4 show that by addition of 1 ppm of triethyl boron the activity definitely increases, but that further additions no longer have any effect. The melt index proves to decrease slightly. By raising the temperature from 97°C to 101°C the melt index increases from 0.10 to 0.21. With polymerization at 97°C in the presence of hydrogen the melt index increases from 0.10 to 0.29, while the effect of the temperature with the use of hydrogen is shown by examples 6, 7 and 8.

TABLE

| Example | Reactor temp. °C | Pressure $C_2=$ | Pressure $H_2$ | TEB ppm B | Productivity | Melt index |
|---|---|---|---|---|---|---|
| 2 | 97 | 600 | 0 | 0 | 2334 | 0,11 |
| 3 | 97 | 600 | 0 | 1 | 3110 | 0,10 |
| 4 | 97 | 600 | 0 | 2 | 2920 | 0,08 |
| 5 | 101 | 600 | 0 | 1 | 2610 | 0,21 |
| 6 | 92 | 1000 | 800 | 1 | 2515 | 0,08 |
| 7 | 97 | 1000 | 800 | 1 | 2500 | 0,29 |
| 8 | 106 | 1000 | 800 | 1 | 2460 | 2,8 |

**Claims**

1. Process for the preparation of a supported chromium oxide type of catalyst for the polymerization of olefins by bringing the conversion product of a chromium-1,3-diketo compound and an organometallic compound of a metal from group II or III of the periodic system on an inert inorganic support, specifically on silica, and heating the whole in a non-reducing atmosphere at a temperature of between 200 and 1200°C, characterized in that a chromium-1,3-diketo compound with the formula $Cr(OCR_1CR_2CR_3O)_3$, where $R_1$, $R_2$ and $R_3$ are the same or different and represent, each of them, an alkyl group with 1—10 carbons atoms and $R_2$ may, moreover, represent a hydrogen atom, and a vanadium chelate or a vanadyl chelate of a 1,3-diketo compound with the formula

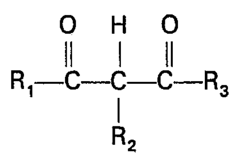

wherein $R_1$, $R_2$ and $R_3$ have the aforesaid meanings, are reacted, separately or jointly, with 0,5—20 moles of an organometallic compound of a metal from group II or III of the periodic system per mole of transition metal, in which hydrocarbyl groups with 1—20 carbon atoms are bound, via a carbon atom, to the relative metal, the reaction products are jointly contacted with and deposited on an inert inorganic support and the support with the chromium and vanadium compounds deposited thereon is heated in a non-reducing atmosphere at a temperature of 200 to 1200°C.

2. Process according to claim 1, characterized in that the 1,3-diketo complexes are reacted with 1—6 moles of an organometallic compound of a metal from group II or III of the periodic system per mole of transition metal.

3. Process according to claims 1—2, characterized in that the 1,3-diketo complexes are reacted with an aluminiumtrialkyl.

4. Process according to claims 1—2, characterized in that the 1,3-diketo complexes are reacted with a magnesiumdialkyl.

5. Process according to claims 1—4, characterized in that the 1,3-diketo complex of chromium is the chromium(III)acetlyacetonate.

6. Process according to claims 1—5, characterized in that the vanadium compound is an acetlyacetonate.

7. Process according to claims 1—6, characterized in that the vanadium compound is vanadium(III)acetlyacetonate.

8. Process according to claims 1—7, characterized in that the molar ratio of vanadium to chromium is from 50:1 to 1:50.

9. Process according to claim 8, characterized in that the molar ratio of vanadium to chromium is from 20:1 to 1:20.

10. Process according to claims 8—9, characterized in that the molar ratio of vanadium to chromium is from 10:1 to 1:10.

11. Process according to claims 1—10, characterized in that the inert inorganic support is silicon oxide.

12. Process according to claims 1—11, characterized in that the support with the reaction product deposited thereon is heated in an oxygen-containing atmosphere.

13. Process according to claims 1—12, characterized in that the support with the reaction product deposited thereon is heated at 400°C—1200°C.

14. Catalyst obtained according to the process of any one of the claims 1—13.

15. Process for the polymerization of ethylene or the copolymerization of ethylene with 15 moles % at most of one or more α-alkenes with 3 to 15 carbon atoms in the presence of a supported chromium oxide type of catalyst obtained by bringing the conversion product of a chromium-1,3-diketo compound and an organometallic compound of a metal from group II or III of the periodic system on an inert inorganic support, specifically on silica,

and heating the whole in a non-reducing atmosphere at a temperature of between 200°C and 1200°C, characterized in that a catalyst according to claim 14 is used.

16. Process according to claim 15, characterized in that the polymerization is also carried out in the presence of an organometallic compound of a metal of group II or III of the periodic system.

17. Process according to claim 16, characterized in that, as an organometallic compound, a trialkylaluminium is used.

**Patentansprüche**

1. Verfahren zur Herstellung eines Trägerkatalysators des Chromoxid-Typus für die Polymerisation von Olefinen, indem man das Umsetzungsprodukt einer Chrom-1,3-diketoverbindung und einer Organometallverbindung eines Metalles der Gruppe II oder III des Periodensystems auf einen inerten anorganischen Träger, vorzugsweise auf Kielselsäure, aufbringt und das Ganze in einer nichtreduzierenden Atmosphâre auf eine Temperatur zwischen 200 und 1200°C erhitzt, dadurch gekennzeichnet, daß man eine Chrom-1,3-diketoverbindung der Formel $Cr(OCR_1CR_2CR_3O)_3$, worin $R_1$, $R_2$ und $R_3$, die gleich oder verschieden sein können, jeweils für eine Alkylgruppe mit 1 bis 10 Kohlenstoffatomen stehen und $R_2$ überdies ein Wasserstoffatom darstellen kann, und ein Vanadiumchelat oder ein Vanadylchelat einer 1,3-Diketoverbindung der Formel

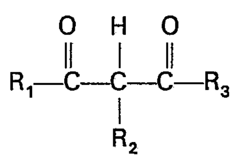

worin $R_1$, $R_2$ und $R_3$ die oben angegebenen Bedeutungen besitzen, getrennt oder gemeinsam mit 0,5 bis 20 Mol einer Organometallverbindung eines Metalles der Gruppe II oder III des Periodensystems pro Mol Übergangsmetall, worin Hydrocarbylgruppen mit 1 bis 20 Kohlenstoffatomen über ein Kohlenstoffatom an das betreffende Metall gebunden sind, umsetzt, die Reaktionsprodukte gemeinsam mit einem inerten anorganischen Träger in Berührung bringt und auf diesem niederschlägt, und den Träger mit den auf ihm niedergeschlagenen Chrom- und Vanadiumverbindungen in einer nichtreduzierenden Atmosphäre auf eine Temperatur von 200 bis 1200°C erhitzt.

2. Verfahren nach Anspruch 1, dadurch gekennzeichnet, daß die 1,3-Diketokomplexe mit 1 bis 6 Mol einer Organometallverbindung eines Metalles der Gruppe II oder III des Periodensystems je Mol Ubergangsmetall umgesetzt werden.

3. Verfahren nach Anspruch 1 oder 2, dadurch gekennzeichnet, daß die 1,3-Diketokomplexe mit Aluminiumtrialkyl umgesetzt werden.

4. Verfahren nach Anspruch 1 oder 2, dadurch gekennzeichnet, daß die 1,3-Diketokomplexe mit Magnesiumdialkyl umgesetzt werden.

5. Verfahren nach einem der Ansprüche 1—4, dadurch gekennzeichnet, daß als 1,3-Diketokomplex des Chroms Chrom(III)acetylacetonat eingesetzt wird.

6. Verfahren nach einem der Ansprüche 1—5, dadurch gekennzeichnet, daß als Vanadiumverbindung ein Acetylacetonat eingesetzt wird.

7. Verfahren nach einem der Ansprüche 1—6, dadurch gekennzeichnet, daß als Vanadiumverbindung Vanadium(III)acetylacetonate eingesetzt wird.

8. Verfahren nach einem der Ansprüche 1—7, dadurch gekennzeichnet, daß das Molverhältnis von Vanadium zu Chrom 50:1 bis 1:50 beträgt.

9. Verfahren nach Anspruch 8, dadurch gekennzeichnet, daß das Molverhältnis von Vanadium zu Chrom 20:1 bis 1:20 beträgt.

10. Verfahren nach Anspruch 8 oder 9, dadurch gekennzeichnet, daß das Molverhältnis von Vanadium zu Chrom 10:1 bis 1:10 beträgt.

11. Verfahren nach einem der Ansprüche 1—10, dadurch gekennzeichnet, daß als interter anorganischer Träger Kieselsäure eingesetzt wird.

12. Verfahren nach einem der Ansprüche 1—11, dadurch gekennzeichnet, daß der Träger mit dem auf ihm niedergeschlagenen Reaktionsprodukt in einer sauerstoffhaltigen Atmosphäre erhitzt wird.

13. Verfahren nach einem der Ansprüch 1—12, dadurch gekennzeichnet, daß der Träger mit dem auf ihm niedergeschlagenen Reaktionsprodukt auf 400 bis 1200°C erhitzt wird.

14. Katalysator, erhalten durch ein Verfahren nach einem der Ansprüche 1—13.

15. Verfahren zur Polymerisation von Äthylen oder zur Copolymerisation von Äthylen mit höchstens 15 Mol-% eines oder mehrerer $\alpha$-Alkene mit 3 bis 15 Kohlenstoffatomen in Gegenwart eines Trägerkatalysators des Chromoxid-Typus, der erhalten wurde durch Aufbringen des Umsetzungsproduktes einer Chrom-1,3-diketoverbindung und einer Organometallverbindung eines Metalles der Gruppe II oder III des Periodensystems auf einen inerten anorganischen Träger, insbesondere auf Kieselsäure, und Erhitzen des Ganzen in einer nichtreduzierenden Atmosphäre auf eine Temperatur von 200 bis 1200°C, dadurch gekennzeichnet, daß ein nach den Ansprüchen 1 bis 13 erhaltener Katalysator eingesetzt wird.

16. Verfahren nach Anspruch 15, dadurch gekennzeichnet, dass als Organometallverbindung ein Dialkylmagnesium eingesetzt wird.

17. Verfahren nach Anspruch 15, dadurch

gekennzeichnet, dass als Organometallverbindung ein Trialkylaluminium eingesetzt wird.

## Revendications

1. Procédé de préparation d'un type de catalyseur à l'oxyde de chrome sur support pour la polymérisation d'oléfines consistant à amener le produit de transformation d'un composé chrome-dicéto-1,3 et un composé organométallique d'un métal du groupe II out III de la classification périodique sur un support minéral inerte, spécifiquement sur de la silice, et à chauffer le tout dans une atmosphère non réductrice à une température comprise entre 200 et 1200°C, caractérisé en ce que l'on fait réagir un composé chrome-dicéto-1,3 de formule $Cr(OCR_1CR_2CR_3O)_3$, dand laquelle $R_1$, $R_2$ et $R_3$ sont identiques ou différents et représentent chacun un groupe alkyle ayant 1—10 atomes de carbone et $R_2$ peut, en outre, représenter un atome d'hydrogène, et un chélate de vanadium ou chélate de vanadyle d'un composé dicéto-1,3 de formule

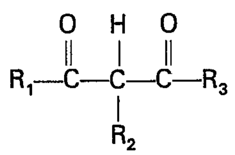

dans laquelle $R_1$, $R_2$ et $R_3$ ont les significations mentionnées ci-dessus, séparément ou conjointement, avec 0,5—20 moles d'un composé organométallique d'un métal du gruppe II ou III de la classification périodique par mole de métal de transition, dans lequel les groupes hydrocarbyle ayant 1—20 atomes de carbone sont liés, par l'intermédiaire d'un atome de carbone, au métal respectif, les produits de la réaction sont conjoinement mis en contact avec un support minéral inerte et déposés sur celui-ci et le support sur lequel sont déposés les composés de chrome et de vanadium est chauffé dans une atmosphère non réductrice à une températur de 200 à 1200°C.

2. Procédé selon la revendication 1, caractérisé en ce que l'on fait réagir les complexes dicéto-1,3 avec 1—6 moles d'un composé organométallique d'un métal du groupe II ou III de la classification périodique par mole de métal de transition.

3. Procédé selon les revendications 1 et 2, caractérisé en ce que l'on fait réagir les complexes dicéto-1,3 avec un trialkylaluminium.

4. Procédé selon les revendications 1 et 2, caractérisé en ce que l'on fait réagir les complexes dicéto-1,3 avec un dialkylmagnésium.

5. Procédé selon les revendications 1 à 4, caractérisé en ce que le complexe dicéto-1,3 de chrome est l'acétylacétonate de chrome(III).

6. Procédé selon les revendications 1 à 5, caractérisé en ce que le composé de vanadium est un acétylacétonate.

7. Procédé selon les revendications 1 à 6, caractérisé en ce que le composé de vanadium est l'acetylacétonate de vanadium(III).

8. Procédé selon les revendications 1 à 7, caractérisé en ce que le rapport molaire du vanadium au chrome est compris entre 50:1 et 1:50.

9. Procédé selon la revendication 8, caractérisé en ce que le rapport molaire du vanadium au chrome est compris entre 20:1 et 1:20.

10. Procédé selon les revendications 8 et 9, caractérisé en ce que le rapport molaire du vanadium au chrome est compris entre 10:1 et 1:10.

11. Procédé selon les revendications 1 à 10, caractérisé en ce que le support minéral inerte est de l'oxyde de silicium.

12. Procédé selon les revendications 1 à 11, caractérisé en ce que le support sur lequel est déposé le produit de la réaction est chauffé dans une atmosphère contenant de l'oxygène.

13. Procédé selon les revendications 1 à 12, caractérisé en ce que le support sur lequel est déposé le produit de la réaction est chauffé à 400°C—1200°C.

14. Catalyseur obtenu par le procédé selon l'une quelconque des revendications 1 à 13.

15. Procédé de polymérisation de l'éthylène ou de copolymérisation de l'éthylène avec au plus 15% en moles d'un ou plusieurs $\alpha$-alcènes ayant 3 à 15 atomes de carbone en présence d'un type de catalyseur à l'oxyde de chrome sur support obtenu en amenant le produit de transformation d'un composé chrome-dicéto-1,3 et un composé organométallique d'un métal du groupe II ou III de la classification périodique sur un support minéral inerte, spécifiquement sur de la silice, et en chauffant le tout dans une atmosphère non réductrice à une température comprise entre 200°C et 1200°C caractérisé en ce que l'on utilise un catalyseur selon la revendication 14.

16. Procédé selon la revendication 15, caractérisé en ce que la polymérisation est aussi réalisée en présence d'un composé organométallique d'un métal du groupe II ou III de la classification périodique.

17. Procédé selon la revendication 16, caractérisé en ce que l'on utilise, comme composé organométallique, un trialkylaluminium.